# EUROPÄISCHE PATENTSCHRIFT

(11) **EP 3 472 937 B1**
(45) Veröffentlichungstag und Bekanntmachung des Hinweises auf die Patenterteilung: **27.10.2021**
(21) Anmeldenummer: 17739216.4
(22) Anmeldetag: 03.07.2017
(51) Int. Cl.: H04B 1/036, B60R 11/02

(54) **LADEVORRICHTUNG ZUM DRAHTLOSEN AUFLADEN EINES WIEDERAUFLADBAREN ELEKTRISCHEN ENERGIESPEICHERS EINES MOBILEN ENDGERÄTS**
CHARGING APPARATUS FOR WIRELESSLY CHARGING A RECHARGEABLE ELECTRICAL ENERGY STORE OF A MOBILE TERMINAL
DISPOSITIF DE CHARGE PERMETTANT DE CHARGER SANS FIL UN ACCUMULATEUR D'ÉNERGIE ÉLECTRIQUE RECHARGEABLE D'UN TERMINAL MOBILE

(30) Priorität: 06.09.2016 DE 102016216900
(43) Veröffentlichungstag der Anmeldung: 24.04.2019
(73) Patentinhaber: Audi AG, 85045 Ingolstadt (DE); Novero Dabendorf GmbH, 15806 Dadendorf (DE)
(72) Erfinder: THIEL, Holger, 85139 Wettstetten (DE); SCHOLZ, Frank, 13505 Berlin (DE)
(86) Internationale Anmeldenummer: PCT/EP2017/066453
(87) Internationale Veröffentlichungsnummer: WO 2018/046156

(56) Entgegenhaltungen:
- EP-A1- 2 988 424
- WO-A1-97/24911
- US-A1- 2013 319 640

## Beschreibung

Die Erfindung betrifft eine Ladevorrichtung zum drahtlosen Aufladen eines wiederaufladbaren elektrischen Energiespeichers eines mobilen Endgeräts sowie ein Fahrzeug mit der Ladevorrichtung.

Vorrichtungen und Verfahren zum Aufladen eines elektrischen Energiespeichers (eines Akkumulators, einer wiederaufladbaren Batterie, eines Superkondensators, etc.) eines mobilen Endgeräts, wie bspw. eines Mobiltelefons, eines Tablet-PC, etc., mittels drahtloser Energieübertragung sind seit längerem bekannt.

Aktuell am weitesten verbreitet sind Vorrichtungen und Verfahren zur induktiven Energieübertragung, bspw. solche gemäß dem Qi-Standard. Daneben sind Vorrichtungen und Verfahren zur drahtlosen Energieübertragung mittels resonanter magnetischer Kopplung bekannt, bspw. solche gemäß dem Rezence-Standard.

Bei beiden Verfahren wird mittels einer oder mehrerer Primärspulen ein Wechselmagnetfeld erzeugt, das im Wege einer Gegeninduktion in einer oder mehreren, bei dem mobilen Endgerät vorhandenen, räumlich durch eine Übertragungsstrecke von der/den Primärspule(n) getrennte(n) Sekundärspule(n) eine Wechselspannung induziert. Der hiermit erzeugte Wechselstrom wird in dem mobilen Endgerät gleichgerichtet und zur Aufladung des dort vorhandenen wiederaufladbaren elektrischen Energiespeichers verwendet.

Durch die Übertragungsstrecke ist die magnetische Kopplung zwischen den Spulen geringer, als dies bspw. bei einem Transformator der Fall ist, wodurch sich im Vergleich zu einem Transformator eine geringere induzierte Spannung in der/den Sekundärspule(n) und ein geringerer Leistungstransfer ergibt.

Somit erfolgt die drahtlose Energieübertragung bei beiden Verfahren mit einem geringeren Wirkungsgrad, als dies bei einer drahtgebundener Energieübertragung der Fall ist, mit der Folge, dass bei einer vergleichbaren Ladestromstärke bei einer drahtlosen Energieübertragung eine höhere Verlustwärme entsteht als bei einer drahtgebundenen Energieübertragung.

Dies kann zu einer deutlichen Erwärmung sowohl des mobilen Endgeräts als auch der Ladevorrichtung führen, auf dem das mobile Endgerät während des Ladevorgangs liegt. Neben der eigenen Erwärmung des mobilen Endgeräts kann somit während eines drahtlosen Aufladevorgangs auch eine zusätzliche Erwärmung des mobilen Endgeräts durch die Ladevorrichtung stattfinden.

Bekanntermaßen verfügen mobile Endgeräte wie etwa Mobiltelefone und Tablet-PCs über eine eigene Temperaturüberwachung wodurch ab Erreichen oder Überschreiten einer vorgebbaren Grenztemperatur bei dem mobilen Endgerät die Prozessorleistung verringert und/oder die Ladestromstärke begrenzt wird. Wird diese Grenztemperatur um einen vorgebbaren Wert überschritten, werden die mobilen Endgeräte vollständig abgeschaltet, um eine Beschädigung des mobilen Endgeräts oder Komponenten davon zu verhindern.

Wie von den Erfindern ermittelt wurde, kann ein drahtloses Aufladen bei gleichzeitiger Durchführung von Funktionen wie Telefonie über Bluetooth^{®} und Wlan sowie Nutzung des mobilen Endgeräts in Verbindung mit dem Multimedia-Interface eine Erwärmung des mobilen Endgeräts (etwa Mobiltelefons, Smartphones) von bis zu 55°Celsius verursachen.

Die ideale Betriebstemperatur für einen Lithium-Ionen-Akku liegt jedoch im Bereich von etwa 15°C bis etwa 25°C und dieser kann bei einer Temperatur >40°C bis zu 35% seiner Kapazität innerhalb eines Jahres verlieren.

Um die Funktionsfähigkeit eines mobilen Endgeräts einschließlich des Aufladens seines wiederaufladbaren elektrischen Energiespeichers auch während einer drahtlosen Energieübertragung sicherzustellen und zu einer Schonung des wiederaufladbaren elektrischen Energiespeichers beizutragen, ist es daher wünschenswert, die im mobilen Endgerät sowie der Ladevorrichtung entstehende Verlustwärme zumindest teilweise von dem mobilen Endgerät abzuführen.

Die US 2011/0148352 A1 beschreibt eine Halteeinrichtung zum Halten eines mobilen Endgeräts und eines Bluetooth^{®}-Kopfhörers. Die Halteeinrichtung kann zum drahtlosen Aufladen eines elektrischen Energiespeichers des mobilen Endgeräts eingerichtet sein. Mittels Klipsen kann die Halteeinrichtung an die Luftauslass-Lamellen einer Klimaanlage eines Kraftfahrzeugs befestigt werden.

Aus der CN 204696773 U ist ein drahtloses Ladesystem mit einer Primärspule zum Wiederaufladen eines elektrischen Energiespeichers eines mobilen Endgeräts bekannt. Das induktive Ladesystem ist mittels eines Axiallüfters kühlbar, um hohe Temperaturen während des drahtlosen Ladens, während der Ausführung einer Navigation oder eines anderen Betriebszustands mit hoher Last zu vermeiden.

Die CN 104999944 A hat eine Mittelarmlehne eines Fahrzeugs mit einem drahtlosen Ladesystem zum Wiederaufladen eines elektrischen Energiespeichers eines mobilen Endgeräts zum Gegenstand. Ein Auslass der Klimaanlage des Fahrzeugs ist in dem Aufnahmeraum für das mobile Endgerät angeordnet.

Die DE 10 2014 009 724 A1 beschreibt eine Aufladevorrichtung für einen Kraftwagen, mit wenigstens einer Ladeeinheit zum Aufladen eines elektronischen Gerätes, insbesondere eines Mobiltelefons, und einer Auflagefläche zum Aufnehmen des elektronischen Gerätes, wobei zwischen der Ladeeinheit und der Auflagefläche ein im Wesentlichen wellenförmiges Strukturelement mit einer Mehrzahl von Öffnungen angeordnet ist, welche mittels in die Aufladevorrichtung eingebrachter Kühlluft durchströmbar sind.

Die DE 101 14 639 A1 hat eine Vorrichtung zur Kühlung von Wärme entwickelnden elektronischen Bauteilen zum Gegenstand, bestehend aus einem dem Bauteil zugeordneten und mit Kühlrippen versehenen Kühlkörper und einem am Kühlkörper angebrachten und an eine Gleichstrom-Speiseleitung angeschlossenen Lüfter. Um die Drehzahl des Lüfters in Abhängigkeit von der entstehenden und der damit verbundenen, abzuführenden Wärmemenge verändern zu können, ist an einer Kühlrippe des Kühlkörpers eine Leiterplatte befestigt und auf der Leiterplatte sind ein temperatursteuerbarer, in die Gleichstrom-Speiseleitung eingesetzter Widerstand und ein nahe der Kühlrippe befindlicher, den Widerstand steuernder Temperaturfühler angeordnet. US 2013/0319640 A1 beschreibt eine periphere elektronische Vorrichtung, die mit einem Koppler ausgestattet sein kann, der in einer Ausführungsform ein thermischer Übertragungskoppler ist. Der thermische Übertragungskoppler kann eine wärmeleitende Oberfläche aufweisen, die dazu eingerichtet ist, Wärme von einer Hauptfläche einer anderen elektronischen Vorrichtung abzuziehen, die in dem Koppler angeordnet ist, die an der thermisch leitfähigen Oberfläche anliegt.

Es ist Aufgabe der vorliegenden Erfindung, eine im Vergleich zum Stand der Technik verbesserte Ladevorrichtung zum drahtlosen Aufladen eines wiederaufladbaren elektrischen Energiespeichers eines mobilen Endgeräts bereitzustellen. Es ist eine weitere Aufgabe der vorliegenden Erfindung, ein Fahrzeug mit der Ladevorrichtung gemäß der vorliegenden Erfindung bereitzustellen. Diese Aufgaben werden gelöst durch die Merkmale der unabhängigen Ansprüche. Vorteilhafte Weiterbildungen und Ausgestaltungen der Erfindung sind Gegenstand der Unteransprüche und können der Beschreibung, den Figuren und der Figurenbeschreibung entnommen werden.

Erfindungsgemäß wird eine Ladevorrichtung zum drahtlosen Aufladen eines wiederaufladbaren elektrischen Energiespeichers eines mobilen Endgeräts vorgeschlagen, aufweisend
- eine Primärspuleneinrichtung und eine damit operativ verbundene erste Steuereinrichtung wenigstens zum Steuern der Stärke und Dauer des durch die Primärspuleneinrichtung erzeugbaren Wechselmagnetfelds, und
- ein Gehäuse, in dem die erste Steuereinrichtung angeordnet ist, wobei das Gehäuse wenigstens eine Lufteintrittsöffnung und wenigstens eine Luftaustrittsöffnung aufweist, wobei die wenigstens eine Luftaustrittsöffnung des Gehäuses in einer Seite des Gehäuses angeordnet ist, deren Außenseite zumindest teilweise die Auflagefläche für das mobile Endgerät ist und derart ausgestaltet ist, dass aus dem Gehäuse der Ladevorrichtung ausströmende Luft in Richtung eines auf der Auflagefläche liegenden mobilen Endgeräts geleitet wird.

Die Ladevorrichtung gemäß der vorliegenden Erfindung ist dadurch gekennzeichnet, dass sie weiter aufweist
- einen Kühlkörper, der in dem Gehäuse angeordnet ist,
- eine aktive Luftzufuhreinrichtung, die dem Kühlkörper zugeordnet ist, die dazu eingerichtet ist, dem Kühlkörper aktiv, zumindest auch durch die wenigstens eine Lufteintrittsöffnung einströmbare Umgebungsluft zuzuführen,
- eine Temperatursensoreinrichtung, die dem Kühlkörper zugeordnet ist, zur Erfassung der Temperatur des Kühlkörpers,
- eine zweite Steuereinrichtung, die in Signalverbindung mit der Temperatursensoreinrichtung steht sowie operativ mit der aktiven Luftzufuhreinrichtung gekoppelt ist, und die dazu eingerichtet ist, die aktive Luftzufuhreinrichtung aktivieren zu können, falls eine vorgebbare erste Grenztemperatur des Kühlkörpers erreicht oder überschritten ist, wobei die zweite Steuereinrichtung auch mit der ersten Steuereinrichtung in Signalverbindung steht und dazu eingerichtet ist, die aktive Luftzufuhreinrichtung nur zu aktivieren, sofern bei oder nach Erreichen oder Überschreiten der ersten Grenztemperatur des Kühlkörpers auch ein drahtloses Aufladen eines elektrischen Energiespeichers eines mobilen Endgeräts durchgeführt wird.

Durch die erfindungsgemäße Ladevorrichtung ergibt sich der Vorteil, dass deren Bestandteile, insbesondere aber die erste Steuereinrichtung und das Gehäuse sowie auch das mobile Endgerät durch den Kühlkörper grundsätzlich passiv gekühlt werden können und nur bei Bedarf aktiv gekühlt werden, wodurch sich Vorteile in Bezug auf den mit der Kühlung verbundenen Energiebedarf und die mit der Kühlung verbundene Geräuschentwicklung ergeben. Im Vergleich zu aus dem Stand der Technik bekannten Lösungen, bei denen eine Kühlung unter Zuhilfenahme einer Klimaanlage erfolgt, wird die bei einer aktiven Kühlung aus der erfindungsgemäßen Ladevorrichtung ausströmende Umgebungsluft von Nutzern auch oftmals als angenehmer empfunden, als die im Vergleich zur Temperatur der Umgebungsluft in der Regel deutlich kühlere, von einer Klimaanlage abgegebene Luft.

Wie oben bereits erwähnt, verfügen moderne mobile Endgeräte über eine Eigenschutzfunktion, um ein möglicherweise schädigendes Erwärmen durch den Betrieb des mobilen Endgeräts (bspw. durch die Ausführung von einem oder mehreren rechenintensiven Programmen) und/oder durch ein Aufladen des bei dem mobilen Endgerät vorhandenen elektrischen Energiespeicher zu verhindern. Insoweit ist es nicht die vorrangige Aufgabe der Ladevorrichtung gemäß der vorliegenden Erfindung, das mobile Endgerät vor thermischen Beschädigungen zu schützen, sondern es ist vorrangige Aufgabe der Ladevorrichtung gemäß der vorliegenden Erfindung, einen möglichst ununterbrochenen Betrieb des mobilen Endgeräts und/oder ein ausreichend schnelles drahtloses Aufladen des bei dem mobilen Endgerät vorhandenen wiederaufladbaren elektrischen Energiespeichers zu gewährleisten.

In der Regel kann bei mobilen Endgeräten davon ausgegangen werden, dass selbst bei Ausführung von einem oder mehreren rechenintensiven Programmen sich das mobile Endgerät nicht so weit erwärmt, dass es sich selbst deaktiviert oder seine Rechenleistung auf ein unerwünscht niedriges Maß senkt. Dies gilt insbesondere in einem Umfeld, wie etwa einem modernen Kraftfahrzeug, in dem bei dessen Betrieb mittels einer Klimatisierungseinrichtung auch bei hohen Außentemperaturen moderate Innenraumtemperaturen gewährleistet sind.

Wenn jedoch bspw. gleichzeitig mit der Ausführung von einem oder mehreren rechenintensiven Programmen ein drahtloses Aufladen des bei dem mobilen Endgerät vorhandenen elektrischen Energiespeichers erfolgt, kann sich durch die dabei entstehende Verlustwärme die Temperatur bei dem mobilen Endgerät auch in einem derartigen Umfeld derart erhöhen, dass sich dieses von selbst ausschaltet oder die Rechenleistung und/oder die Ladestromstärke auf ein unerwünscht niedriges Maß absenkt.

Vor diesem Hintergrund kann es in vielen Fällen ausreichend sein, wenn bei der erfindungsgemäßen Ladevorrichtung die aktive Luftzufuhreinrichtung nur solange aktiviert wird, solange bei Erreichen oder Überschreiten der ersten Grenztemperatur des Kühlkörpers gleichzeitig durch die zweite Steuereinrichtung (etwa durch Empfang und gegebenenfalls Auswertung eines von der ersten Steuereinrichtung empfangenen Signals) festgestellt wird, dass ein drahtloser Aufladevorgang stattfindet.

Gemäß einer ersten vorteilhaften Weiterbildung der Ladevorrichtung kann diese weiter einen Anwesenheitssensor aufweisen, der dazu eingerichtet ist festzustellen, ob sich auf der Auflagefläche des Gehäuses ein Gegenstand befindet. Der Anwesenheitssensor steht in Signalverbindung mit der zweiten Steuereinrichtung.

Bei der Ladevorrichtung gemäß der vorliegenden Erfindung kann die zweite Steuereinrichtung in vorteilhafter Weise auch dazu eingerichtet sein,
- die aktive Luftzufuhreinrichtung erst wieder zu deaktivieren, sobald eine vorgebbare zweite Grenztemperatur des Kühlkörpers, die niedriger als die erste Grenztemperatur ist, erreicht oder unterschritten ist, und/oder
- die aktive Luftzufuhreinrichtung nicht zu aktivieren sofern oder zu deaktivieren sobald durch den Anwesenheitssensor festgestellt wird, dass sich auf der Auflagefläche des Gehäuses kein Gegenstand befindet.

Des Weiteren kann bei der Ladevorrichtung gemäß der vorliegenden Erfindung vorgesehen sein, dass die aktive Luftzufuhreinrichtung in der wenigstens einen Lufteintrittsöffnung des Gehäuses angeordnet ist. Hierdurch ergibt sich eine besonders kompakte Bauweise der Ladevorrichtung.

Weiter ist es von Vorteil, wenn bei der Ladevorrichtung gemäß der vorliegenden Erfindung die wenigstens eine Luftaustrittsöffnung in einem vorgebbaren Randbereich R der Seite des Gehäuses angeordnet ist, deren Außenseite zumindest teilweise als Auflagefläche für das mobile Endgerät dient, derart, dass die wenigstens eine Luftaustrittsöffnung in einem Einbauzustand des Gehäuses um einen vorgebbaren Abstandswert A horizontal gegenüber dem der wenigstens einen Luftaustrittsöffnung nächstkommenden Teil der ersten Steuereinrichtung versetzt ist

Bei der Ladevorrichtung gemäß der vorliegenden Erfindung kann die wenigstens eine Luftaustrittsöffnung in vorteilhafter Weise auch derart ausgebildet sein, dass die Strömungsrichtung der durch sie austretenden Luft einen spitzen Winkel gegenüber der Auflagefläche aufweist.

Um ein Strömen der aus der wenigstens einen Luftaustrittsöffnung austretenden Luft zwischen die Auflagefläche der Ladevorrichtung und einem auf der Auflagefläche liegenden mobilen Endgerät sicherzustellen, kann die Auflagefläche in vorteilhafter Weise Abstandselemente aufweisen, durch die zwischen der Auflagefläche und einer Auflageseite des mobilen Endgeräts ein vorgebbarer Abstand gewährleistet ist.

Um die Fähigkeit des Kühlkörpers zur Wärmeabstrahlung zu erhöhen, kann dieser auch Kühlrippen, Kühlflossen und/oder Kühlstifte aufweisen, die in einem Einbauzustand des Kühlkörpers auf der der ersten Steuereinrichtung abgewandten Seite des Kühlkörpers angeordnet sind.

Gemäß weiteren vorteilhaften Ausgestaltungen der Ladevorrichtung kann
- bei dieser die Primärspuleneinrichtung in einem Einbauzustand benachbart zur ersten Steuereinrichtung angeordnet und/oder die Primärspuleneinrichtung ein Element der Seite des Gehäuses sein, deren Außenseite zumindest teilweises als Auflagefläche für das mobile Endgerät dient,
- diese weiter eine Mobilfunkantennen-Einrichtung aufweisen, die in dem Gehäuse angeordnet ist oder ein Element der Seite des Gehäuses sein, deren Außenseite zumindest teilweises als Auflagefläche für das mobile Endgerät dient, und/oder
- dieser eine Mikrofoneinrichtung zur Erfassung der Lautstärke in einem Umfeld der Ladevorrichtung zugeordnet sein, die zweite Steuereinrichtung in Signalverbindung mit der Mikrofoneinrichtung stehen und dazu eingerichtet sein, die aktive Luftzufuhreinrichtung auch in Abhängigkeit von der Lautstärke in dem Umfeld der Ladevorrichtung anzusteuern.

Von der vorliegenden Erfindung umfasst ist auch ein Fahrzeug, insbesondere Kraftfahrzeug mit einer erfindungsgemäßen Ladevorrichtung oder einer ihrer vorteilhaften Weiterbildungen oder Ausgestaltungen.

Von der vorliegenden Erfindung sind weiter umfasst auch Verfahren zum Betreiben der Ladevorrichtung sowie des Fahrzeugs, wie sie sich für einen Fachmann ohne weiteres aus der vorliegenden Beschreibung, den Ansprüchen, den Figuren und der Figurenbeschreibung ergeben.

Im Folgenden sind einige bevorzugte Ausführungsbeispiele der Erfindung beschrieben. Hierzu zeigen
- Fig. 1: eine Schnittansicht einer nicht erfindungsgemäßen Ladevorrichtung;
- Fig. 2: eine Schnittansicht eines ersten Beispiels einer Ladevorrichtung gemäß der vorliegenden Erfindung;
- Fig. 3: eine Schnittansicht eines zweiten Beispiels einer Ladevorrichtung gemäß der vorliegenden Erfindung;
- Fig. 4: eine Ansicht von oben auf ein Beispiel einer Ladevorrichtung gemäß der vorliegenden Erfindung, angeordnet in einem (nicht zur Erfindung gehörigen) Einbauschacht;
- Fig. 5: eine Ansicht von unten auf ein Beispiel einer Ladevorrichtung gemäß der vorliegenden Erfindung, angeordnet in einem (nicht zur Erfindung gehörigen) Einbauschacht; und

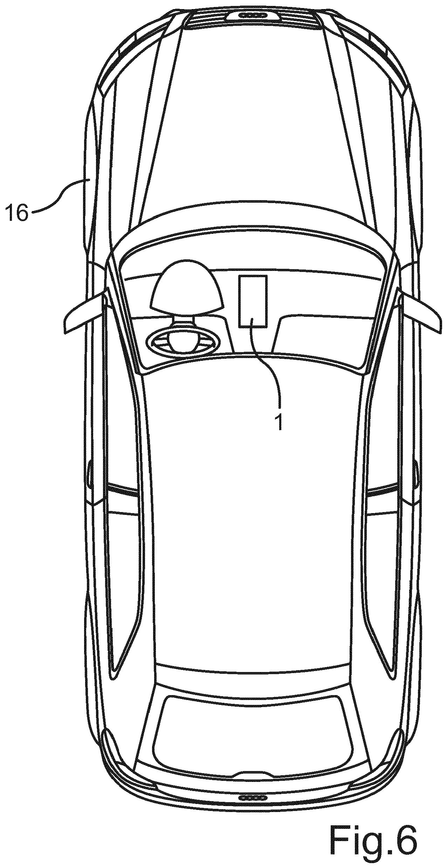

- Fig. 6: eine schematische Ansicht eines Kraftfahrzeugs mit einer Ladevorrichtung gemäß der vorliegenden Erfindung.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Die in der obigen Beschreibung genannten Merkmale und Merkmalskombinationen sowie die in der nachfolgenden Beschreibung von Ausführungsformen, Ausführungsbeispielen und der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der vorliegenden Erfindung zu verlassen.

In der nachfolgenden Beschreibung wird ganz überwiegend auf die nähere Erläuterung und Beschreibung von Komponenten, Baugruppen, Einrichtungen, etc. der Ladevorrichtung sowie von deren Zusammenwirken verzichtet, da diese dem Fachmann aus seinem allgemeinen Fachwissen heraus bekannt sind. So wird in der vorliegenden Anmeldung davon ausgegangen, dass Fachleuten die Grundprinzipien der verschiedenen Möglichkeiten einer drahtlosen Aufladung von Energiespeichern von mobilen Endgeräten bekannt sind, welche Komponenten, Baugruppen, Einrichtung, etc. hierzu auf der Primär- und der Sekundärseite vorhanden sein müssen bzw. können, und wie diese bei einem Vorgang einer drahtlosen Aufladung gegebenenfalls zusammenwirken und/oder kommunizieren.

Die in den Figuren gezeigten räumlichen Anordnungen der Komponenten, Baugruppen, Einrichtungen, etc. der Ladevorrichtung sowie deren Anordnung zueinander sind rein beispielhaft zu verstehen. Jedoch können solche Ladevorrichtungen bevorzugt Bestandteil der vorliegenden Erfindung sein, die die in den Figuren gezeigte Anordnung der Komponenten, Baugruppen, Einrichtungen, etc. sowie deren Anordnung zueinander aufweisen.

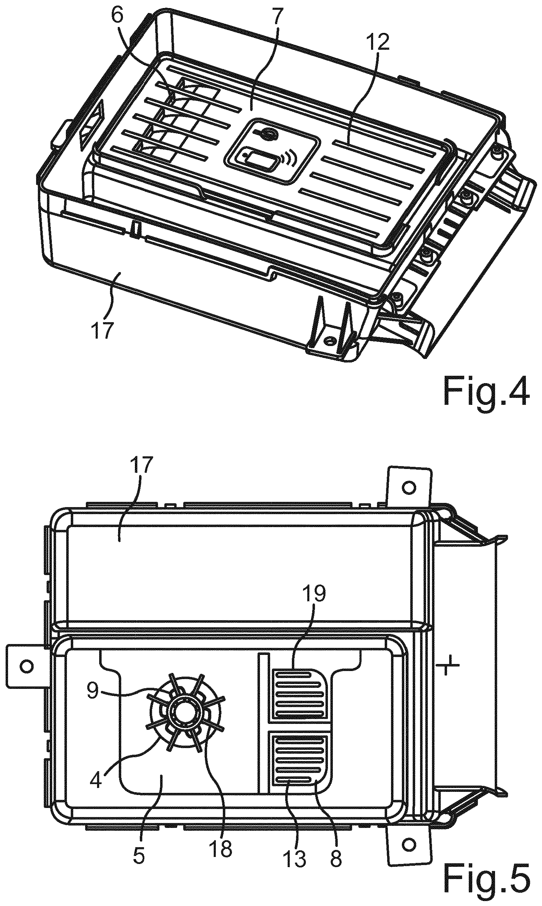

In den Figuren 4 und 5 ist die Ladevorrichtung 1 angeordnet in einem Einbauschacht 17 dargestellt. Diese Darstellung dient lediglich zur Veranschaulichung dafür, wie die Ladevorrichtung 1 bspw. in einem (Kraft)Fahrzeug verbaut sein kann. Der Einbauschacht 17 stellt keinen Bestandteil der Ladevorrichtung 1 gemäß der vorliegenden Erfindung dar.

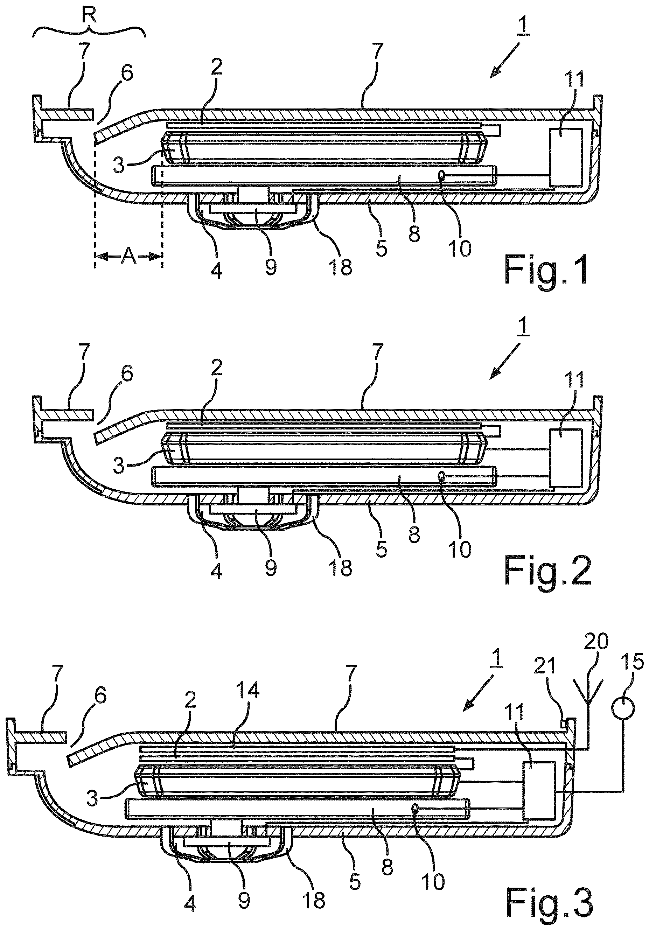

Wie in Fig. 1 beispielhaft gezeigt ist, weist die Ladevorrichtung 1 gemäß der vorliegenden Erfindung eine Primärspuleneinrichtung 2 und eine damit operativ verbundene erste Steuereinrichtung 3 wenigstens zum Steuern der Stärke und Dauer des durch die Primärspuleneinrichtung 2 erzeugbaren Wechselmagnetfelds auf, wobei die erste Steuereinrichtung 3 in einem Gehäuse 5 angeordnet ist, das in dem gezeigten Beispiel ausgebildet ist durch eine, wenigstens eine Lufteintrittsöffnung 4 aufweisende Unterschale und einem, wenigstens eine Luftaustrittsöffnung 6 aufweisenden "Deckel", der mit der Unterschale verbunden oder verbindbar ist, und dessen Außenseite zumindest teilweise als Auflagefläche 7 für das mobile Endgerät dient.

Es kann von Vorteil sein, wenn der "Deckel" (die obere Abdeckung der Unterschale) lösbar mit der Unterschale verbunden ist, um die obere Abdeckung gegebenenfalls auf einfache Weise austauschen zu können, um bspw. eine möglichst optimal auf die Größe (Fläche) von bestimmten mobilen Endgeräten angepasste Auflagefläche 7 bereitzustellen, bestimmten farblichen und/oder haptischen Vorlieben von Kunden entsprechen zu können, oder um beschädigte oder (dauerhaft) verschmutzte Auflagen auf kostengünstige Weise ersetzten zu können.

Das Gehäuse 5 braucht jedoch nicht in der in den Figuren 1 bis 3 dargestellten Weise ausgestaltet zu sein, und es können bspw. die Unterschale und die Auflage einstückig ausgebildet sein, wobei dann bspw. an einer Seitenwand der Unterschale eine verschließbare Öffnung vorgesehen sein kann.

Die Primärspuleneinrichtung 2 kann 1, 2, 3 oder mehr (in den Figuren der Übersichtlichkeit halber nicht dargestellte) Primärspulen aufweisen, die im Falle einer Mehrzahl an Primärspulen nebeneinander angeordnet sind. Die Primärspuleneinrichtung 2 kann, wie in den Figuren 1 bis 3 beispielhaft dargestellt ist, in dem Gehäuse 5 der Ladevorrichtung 1 angeordnet sein, kann jedoch auch ein Bestandteil der Seite des Gehäuses 5 sein, dessen Außenseite zumindest teilweise als Auflagefläche 7 für das mobile Endgerät dient.

Die erste Steuereinrichtung 3 kann zur Sicherstellung der elektromagnetischen Verträglichkeit in einem geeigneten Gehäuse angeordnet sein (und in den Figuren 1 bis 3 ist die erste Steuereinrichtung 3 auch in einem solchen Gehäuse dargestellt). Bekanntermaßen erfolgt bei den verschiedenen Standards zur drahtlosen Aufladung von elektrischen Energiespeichern mobiler Endgeräte oftmals eine Kommunikation zwischen dem mobilen Endgerät und einer Steuereinrichtung (hier der ersten Steuereinrichtung 3) derart, dass von dem mobilen Endgerät die zulässige Ladestromstärke angefordert wird und die Steuereinrichtung (hier die erste Steuereinrichtung 3) die Primärspuleneinrichtung 2 entsprechend der angeforderten Ladestromstärke ansteuert. Die erste Steuereinrichtung 3 weist demgemäß erforderlichenfalls die hierfür erforderlichen Kommunikations- und Steuerungseinrichtungen auf.

Das Gehäuse 5 der Ladevorrichtung 1 kann aus jedem geeigneten Material ausgebildet sein, bspw. aus einem Kunststoff, aus mehreren verschiedenen Kunststoffen, aus einem Verbundmaterial, aus mehreren verschiedenen Verbundmaterialen, etc. Da lediglich der Teil der Seite des Gehäuses 5, deren Außenseite als Auflagefläche 7 für das mobile Endgerät dient, für die durch die Primärspuleneinrichtung 2 erzeugten Wechselmagnetfelder durchlässig sein muss, ist es auch nur erforderlich, dass dieser Teil aus einem entsprechenden, geeigneten Material besteht.

Die Außenseite des Gehäuses 5, von dem wenigstens eine Teil als Auflagefläche 7 für das mobile Endgerät dient, kann, auch wenn dies in den Figuren nicht dargestellt ist, selbstverständlich bspw. Haltearme oder Haltebügel aufweisen, die gegebenenfalls gegen eine Federkraft beweglich ausgebildet sind und/oder die an verschiedenen Position an der Auflagefläche 7 (lösbar) befestigbar sind, um ein sicheres (Fest)Halten und gegebenenfalls auch optimales Positionieren von verschiedenen oder verschieden großen mobilen Endgeräten an der Auflagefläche 7 zu gewährleisten. Wie in den Figuren 1 bis 4 angedeutet ist, kann diese Außenseite des Gehäuses 5 auch "schalenartig" (d.h. mit erhöhten Rändern) ausgebildet sein.

Die Ladevorrichtung 1 weist in ihrem Gehäuse 5 angeordnet einen Kühlkörper 8 auf. Kühlkörper sind aus dem Stand der Technik hinlänglich bekannt und bestehen, ebenso wie der erfindungsgemäß verwendete Kühlkörper 8, in der Regel aus einem hierfür geeigneten Metall (Aluminium, Kupfer, Gusseisen, etc.). Des Weiteren kann der erfindungsgemäß verwendete Kühlkörper 8 aus dem Stand der Technik bekannte Kühlrippen 13, Kühlflossen und/oder Kühlstifte aufweisen (siehe Fig. 5), die in bevorzugter Weise in einem Einbauzustand des Kühlkörpers 8 auf einer der ersten Steuereinrichtung 3 abgewandten Seite des Kühlkörpers 8 angeordnet sind.

Die Größe des Kühlkörpers 8, die Dicke und Form unterliegen keiner besonderen Einschränkung und es können bspw. für unterschiedliche Anforderungen bei der Ladevorrichtung 1 unterschiedliche Kühlkörper 8 vorgesehen sein. Auch kann die Ladevorrichtung 1 mehr als einen Kühlkörper 8 aufweisen.

Durch Kühlrippen 13, Kühlflossen und/oder Kühlstifte kann nicht nur die Wärme abgebende Oberfläche des Kühlkörpers 8 vergrößert werden, sondern diese können gleichzeitig auch dazu dienen, einen vorgebbaren Abstand der Unterseite des Grundkörpers des Kühlkörpers 8 von der Innenseite des Gehäuses 5 zu gewährleisten. Des Weiteren kann insbesondere mit Kühlrippen 13/Kühlflossen auch der Strömungsverlauf der durch die aktive Luftzufuhreinrichtung 9 angesaugten Umgebungsluft beeinflusst werden.

Der Kühlkörper 8 ist in bevorzugter Weise benachbart zur ersten Steuereinrichtung 3, besonders bevorzugt unmittelbar benachbart zur ersten Steuereinrichtung 3 angeordnet, wobei zwischen Kühlkörper 8 und erster Steuereinrichtung 3 auch ein oder mehrere Wärmeleitelemente (etwa Wärmeleitpad(s)) angeordnet sein können.

Die in den Figuren 1 bis 3 gezeigte Anordnung des Kühlkörpers 8 "unterhalb" der ersten Steuereinrichtung 3 ist lediglich beispielhaft zu verstehen. Der Kühlkörper 8 kann bspw. auch zwischen der Primärspulenanordnung 2 (die zur Erzielung eines möglichst hohen Wirkungsgrades regelmäßig direkt unterhalb oder in der Seite des Gehäuses 5 angeordnet ist, deren Außenseite zumindest teilweise als Auflagefläche 7 für das mobile Endgerät dient) und der ersten Steuereinrichtung 3 angeordnet sein. Hierdurch kann der Kühlkörper 8 gegebenenfalls (d.h. bei einer in der Seite des Gehäuses 5 angeordneten Primärspulenanordnung 2, deren Außenseite zumindest teilweise als Auflagefläche 7 für das mobile Endgerät dient) sogar unmittelbar benachbart zu der Innenfläche der Seite des Gehäuses 5 angeordnet sein, deren Au-ßenseite zumindest teilweise als Auflagefläche 7 für das mobile Endgerät dient. In beiden Fällen ergibt sich der Vorteil, dass von einem auf der Auflagefläche 7 liegenden mobilen Endgerät abgestrahlte Wärme "über eine kurze Distanz" oder gar "über eine kürzest mögliche Distanz" zu dem Kühlkörper gelangen und so eine besonders gute und effiziente (passive und/oder aktive) Kühlung des mobilen Endgeräts erreicht werden kann.

Bei der aktiven Luftzufuhreinrichtung 9, die dem Kühlkörper 8 zugeordnet ist, kann es sich um jede für den erfindungsgemäßen Zweck geeignete aktive (d.h. elektrische, elektromechanische elektropneumatische, etc.) Luftzufuhreinrichtung 9 handeln, bspw. um einen oder mehrere Axiallüfter, einen oder mehrere Radiallüfter, einen oder mehrere Tangentiallüfter, einen oder mehrere synthetische Jets oder eine beliebige Kombination davon.

Es kann vorgesehen sein, dass die aktive Luftzufuhreinrichtung 9 an dem Kühlkörper 8 (gegebenenfalls lösbar) befestigt ist, bspw. mittels Kraftschluss, Formschluss und/oder Stoffschluss (bspw. mittels Schrauben, mittels Schrauben und Muttern, mittels Splinte, Nieten, Klipsen, einer Bajonettverbindung, einer Lötverbindung, einer Schweißverbindung, etc., oder eine Kombination davon).

Die aktive Luftzufuhreinrichtung 9 ist dazu eingerichtet, dem Kühlkörper 8 aktiv zumindest auch durch die wenigstens eine Lufteintrittsöffnung 4 einströmbare Umgebungsluft zuzuführen. Und durch das für die Ladevorrichtung 1 vorgesehene Gehäuse 5 und dessen Ausgestaltung ergibt sich, dass zumindest ein Teil der durch die aktive Luftzufuhreinrichtung 9 angesaugten Luft durch die zumindest eine Luftaustrittsöffnung 6 wieder austritt.

Wie in den Figuren 1, 2, 3 und 5 dargestellt ist, ist die aktive Luftzufuhreinrichtung 9 in bevorzugter Weise in der wenigstens einen Lufteintrittsöffnung 4 des Gehäuses 5 angeordnet, wobei mit "in" hier auch fluchtend zumindest teilweise "vor" oder "hinter" der Lufteintrittsöffnung 4 zu verstehen ist. Hierdurch kann sichergestellt werden, dass zumindest ganz überwiegend nur Umgebungsluft von außerhalb des Gehäuses 5 angesaugt und zu dem Kühlkörper 8 geleitet wird.

Erfindungsgemäß ist vorgesehen, dass die aktive Luftzufuhreinrichtung 9 nur dann aktiviert wird bzw. ist (d.h. mit elektrischem Strom einer geeigneten Stärke, Spannung und Art versorgt wird), sofern und solange eine vorgebbare erste Grenztemperatur des Kühlkörpers 8 erreicht oder überschritten ist. Um dies zu ermöglichen, ist dem Kühlkörper 8 eine (aus dem Stand der Technik bekannte und für den erfindungsgemäßen Zweck geeignete) Temperatursensoreinrichtung 10 zur Erfassung der Temperatur des Kühlkörpers 8 zugeordnet, und weist die Ladevorrichtung 1 eine zweite Steuereinrichtung 11 auf, die in Signalverbindung mit der Temperatursensoreinrichtung 10 steht sowie operativ mit der aktiven Luftzufuhreinrichtung 9 gekoppelt ist. Die zweite Steuereinrichtung 11 ist gemäß dieser Ausführungsform dazu eingerichtet, die aktive Luftzufuhreinrichtung 9 zu aktivieren, sobald und solange eine vorgebbare erste Grenztemperatur des Kühlkörpers 8 erreicht oder überschritten ist. Als erste Grenztemperatur kann bspw. eine Temperatur von 40°C, 41°C, 42°C, 43°C, 44°C oder 45°C vorgegeben sein.

Gemäß der vorliegenden Erfindung ist, wie in Fig. 2 schematisch dargestellt ist, vorgesehen, dass die zweite Steuereinrichtung 11 auch mit der ersten Steuereinrichtung 3 in Signalverbindung steht und dazu eingerichtet ist, die aktive Luftzufuhreinrichtung 9 nur zu aktivieren, sofern bei oder nach Erreichen oder Überschreiten der ersten Grenztemperatur auch ein drahtloses Aufladen eines elektrischen Energiespeichers eines mobilen Endgeräts durchgeführt wird.

Selbstverständlich weisen die erste Steuereinrichtung 3, die zweite Steuereinrichtung 11 sowie die aktive Luftzufuhreinrichtung 9 entsprechende Stromversorgungsleitungen auf. Diese sind lediglich der Übersichtlichkeit halber in den Figuren nicht dargestellt. Auch kann das Gehäuse 5 eine Anschlusseinrichtung (Steckdose) aufweisen, mit der die Ladevorrichtung 1 und die mit elektrischem Strom zu versorgenden Einrichtungen davon gemeinsam an ein Stromnetz (bspw. ein 12V oder 24V Bordnetz eines Kraftfahrzeugs 16) angeschlossen werden kann/können. Auch eine solche Anschlusseinrichtung ist der Übersichtlichkeit halber in den Figuren nicht dargestellt.

Wie oben bereits ausgeführt ist, kann bei einem drahtlosen Aufladen eines elektrischen Energiespeichers eines mobilen Endgeräts vergleichsweise viel Verlustwärme entstehen, die zu einer stärkeren Erwärmung des mobilen Endgeräts und gegebenenfalls auch der Ladevorrichtung 1 führen kann. Vor diesem Hintergrund kann es oftmals ausreichend sein, die Aktivierung der aktiven Luftzufuhreinrichtung 9 (auch bei Erreichen oder Überschreiten der ersten Grenztemperatur) davon abhängig zu machen, dass ein solcher Ladevorgang im Gange ist.

Die Ladevorrichtung 1 kann auch dahin weitergebildet sein, dass die zweite Steuereinrichtung 11 dazu eingerichtet ist, die aktive Luftzufuhreinrichtung 9 erst wieder zu deaktivieren, sobald eine vorgebbare zweite Grenztemperatur des Kühlkörpers 8, die niedriger als die erste Grenztemperatur ist, erreicht oder unterschritten ist.

Als zweite Grenztemperatur kann bspw. eine vorgegeben sein, die 5°C, 6°C, 7°C, 8°C, 9°C oder 10°C niedriger ist als die erste Grenztemperatur. Ausgehend von den oben beispielhaft erwähnten ersten Grenztemperaturen kann bspw. für die zweite Grenztemperatur ein Wert im Bereich von 30°C bis 40°C vorgegeben sein, bspw. ein Wert von 35°C.

Gemäß dieser Ausführungsform wird es regelmäßig erforderlich sein, die aktive Luftzufuhreinrichtung 9 länger zu betreiben, als dies erforderlich wäre, wenn die aktive Luftzufuhreinrichtung 9 bereits dann deaktiviert würde, sobald die erste Grenztemperatur wieder unterschritten ist. Auf der anderen Seite kann durch die Berücksichtigung einer zweiten (niedrigeren) Grenztemperatur eine stärkere Abkühlung der Ladevorrichtung 1 und somit auch eines auf der Auflagefläche 7 der Ladevorrichtung 1 befindlichen mobilen Endgeräts erreicht werden, als ohne eine solche Berücksichtigung.

Die Ladevorrichtung 1 kann in vorteilhafter Weise auch einen Anwesenheitssensor 21 (siehe Fig. 3) aufweisen, der dazu eingerichtet ist festzustellen, ob sich auf der Auflagefläche 7 des Gehäuses 5 ein Gegenstand befindet, und der in Signalverbindung mit der zweiten Steuereinrichtung 11 steht.

Bei dem Anwesenheitssensor 21 kann es sich um jede "Sensor"-Einrichtung" handeln, mit der die Anwesenheit eines Gegenstands auf der Auflagefläche 7 festgestellt werden kann. So kann der Anwesenheitssensor 21 in einem einfachen Fall als ein in der Auflagefläche 7 angeordneter elektromechanischer Anwesenheitsschalter ausgebildet sein, der betätigt (geschlossen oder geöffnet) wird, wenn ein Gegenstand auf ihn gelegt oder an ihn angelegt wird. Als weitere Beispiele für einen Anwesenheitssensor 21, wie sie für die vorliegende Erfindung verwendbar ist, seien hier nicht abschließend erwähnt eine Lichtschranke, ein optisches Bilderfassungs- und Auswertungssystem, ein induktiver, kapazitiver, Infrarot- oder Ultraschall-Anwesenheitssensor, ein induktiver, kapazitiver, Infrarot- oder Ultraschall-Bewegungssensor, etc.

Bewegungssensoren können an sich ― wie der Name schon angibt ― nur Bewegungen erfassen. Wenn jedoch ein Bewegungsvorgang eines Gegenstands in Richtung der Auflagefläche 7 festgestellt wird und kein nachfolgender Bewegungsvorgang des Gegenstands von der Auflagefläche 7 weg festgestellt werden kann, so kann dieser Umstand dazu verwendet werden, anzunehmen, dass sich der Gegenstand auch tatsächlich auf der Auflagefläche 7 befindet. Umgekehrtes gilt bei Feststellung eines Bewegungsvorgangs des Gegenstands weg von der Auflagefläche 7.

Ist ein Anwesenheitssensor 21 bei der Ladevorrichtung 1 vorgesehen, kann die zweite Steuereinrichtung 11 dazu eingerichtet sein, die aktive Luftzufuhreinrichtung 9 nicht zu aktivieren sofern oder zu deaktivieren sobald durch den Anwesenheitssensor 21 festgestellt wird, dass sich auf der Auflagefläche 7 kein Gegenstand (also auch kein mobiles Endgerät) befindet.

Dieses Nichtaktivieren bzw. das Deaktivieren der aktiven Luftzufuhreinrichtung 9 kann unabhängig von der Temperatur des Kühlkörpers 8 erfolgen, also bspw. auch dann, wenn die Temperatur des Kühlkörpers 8 die erste Grenztemperatur erreicht oder überschritten hat.

Wenn bspw. ein Fahrer bei einem stehenden (Kraft)Fahrzeug das mobile Endgerät verwenden möchte und er es hierzu von der Ladeeinrichtung 1 entfernt, (anhebt) ist ein (weiterer) Betrieb der aktiven Luftzufuhreinrichtung 9 ― jedenfalls in Bezug auf das mobile Endgerät ― nicht (mehr) von Nutzen, da das mobile Endgerät durch die aus der Luftaustrittsöffnung 6 des Gehäuses 5 austretende Umgebungsluft naturgemäß nicht mehr gekühlt werden kann.

Vor diesem Hintergrund kann in einem solchen Fall die aktive Luftzufuhreinrichtung 9 deaktiviert werden, um etwa eine Geräusch-Emission durch den Betrieb der Luftzufuhreinrichtung 9 und das Strömen der Umgebungsluft zu vermeiden. Eine solche Geräusch-Emission kann bei der Verwendung des mobilen Endgeräts (etwa bei einem Telefonat) als störend empfunden werden.

Bei der Ladevorrichtung 1 ist die wenigstens eine Luftaustrittsöffnung 6 in vorteilhafter Weise in einem vorgebbaren Randbereich R der Seite des Gehäuses 5 angeordnet, deren Außenseite zumindest teilweise als Auflagefläche 7 für das mobile Endgerät dient, derart, dass die wenigstens eine Luftaustrittsöffnung 6 in einem Einbauzustand des Gehäuses 5 um einen vorgebbaren Abstandswert A horizontal gegenüber dem der wenigstens einen Luftaustrittsöffnung 6 nächstkommenden Teil der ersten Steuereinrichtung 3 versetzt ist.

Der Randbereich R kann auf jede geeignete Weise definiert sein, und etwa 5%, 10%, 15% oder 20% der Länge oder/oder Breite der Seite des Gehäuses 5 betragen, deren Außenseite zumindest teilweise als Auflagefläche 7 für das mobile Endgerät dient. In Fig. 1 ist ein beispielhafter Randbereich R angezeigt.

Angenommen, die Ladevorrichtung 1 gemäß der vorliegenden Erfindung ist im Zwischenraum zwischen den Vordersitzen eines Kraftfahrzeugs 16 angeordnet, derart, dass die Auflagefläche 7 für das mobile Endgerät sich in einem Einbauzustand bei einem horizontal ausgerichteten Kraftfahrzeug 16 ebenfalls im Wesentlichen horizontal erstreckt. In einem solchen Fall kann nicht ausgeschlossen werden, dass durch einen Insassen des Kraftfahrzeugs 16 aus Unachtsamkeit bspw. Mineralwasser oder ein anderes Getränk vergossen wird, dieses auf die Auflagefläche 7 der Ladevorrichtung 1 gelangt und von dort durch die wenigstens eine Luftaustrittsöffnung 6 in das Gehäuse 5 der Ladevorrichtung 1 eindringt.

Ist gemäß der zuletzt genannten Weiterbildung in einem Einbauzustand ein ausreichend großer horizontaler Abstand zwischen der wenigstens einen Luftaustrittsöffnung 6 und dem der wenigstens einen Luftaustrittsöffnung 6 nächstkommenden Teil der ersten Steuereinrichtung 3 vorgesehen, wird die in das Gehäuse 5 der Ladevorrichtung 1 eindringende Flüssigkeit nicht in den Bereich der ersten Steuereinrichtung 3 gelangen und kann, insbesondere wenn die wenigstens eine Lufteintrittsöffnung 4 im Bodenbereich des Gehäuses 5 vorgesehen ist, durch diese nach unten abgeleitet werden. Hierdurch kann eine Beschädigung der Ladevorrichtung 1 durch eindringende Flüssigkeit in vielen Fällen verhindert werden.

Entsprechende Überlegungen gelten auch für die zweite Steuervorrichtung 11, sofern diese, wie in den Figuren 1 bis 3 dargestellt, innerhalb des Gehäuses 5 der Ladevorrichtung 1 angeordnet ist. Ein Fachmann wird in einem solchen Fall die Positionierung der wenigstens einen Luftaustrittsöffnung 6 so wählen, dass bei in einer Einbauposition eindringende Flüssigkeit weder die erste 3 noch die zweite Steuereinrichtung 11 Schaden nehmen wird.

Die in den Figuren 1 bis 3 gezeigte Anordnung der zweiten Steuereinrichtung 11 innerhalb des Gehäuses 5 der Ladevorrichtung 1 ist in keiner Weise zwingend und die zweite Steuereinrichtung 11 kann selbstverständlich auch außerhalb des Gehäuses 5 der ersten Ladevorrichtung 1 angeordnet sein. Bei der Ladevorrichtung 1 gemäß der vorliegenden Erfindung kann die wenigstens eine Luftaustrittsöffnung 6 derart ausgebildet sein, dass die Strömungsrichtung der durch sie austretenden Luft einen spitzen Winkel gegenüber der Auflagefläche 7 aufweist. Dieser spitze Winkel ist nicht besonders beschränkt, beträgt jedoch in bevorzugter Weise im Bereich von 0° (d.h. Strömungsrichtung der austretenden Luft parallel zur Oberfläche der Auflagefläche 7) und etwa 30°. Hierdurch ist auf besonders einfache Weise sichergestellt, dass die austretende Luft zumindest teilweise in den Zwischenraum strömt, der durch die Auflagefläche 7 und einem auf der Auflagefläche 7 aufliegenden mobilen Endgerät ausgebildet ist, und dies unabhängig davon, ob die Fläche des mobilen Endgeräts, die auf der Auflagefläche 7 aufliegt, die wenigstens eine Luftaustrittsöffnung 6 überdeckt oder nicht.

Auf besonders sichere Art und Weise kann eine "Hinterlüftung" eines auf der Auflagefläche 7 der Ladevorrichtung 1 liegenden mobilen Endgeräts erreicht werden, wenn, wie dies gemäß einer weiteren vorteilhaften Weiterbildung der Erfindung vorgesehen ist, die Auflagefläche 7 Abstandselemente 12 aufweist, durch die zwischen der Auflagefläche 7 und einer Auflageseite des mobilen Endgeräts ein vorgebbarer Abstand gewährleistet ist.

Die Abstandselemente 12 unterliegen keiner besonderen Beschränkung und diese können bspw. in Form von Stegen (wie bspw. in Fig. 4 dargestellt), stift- oder noppenartigen Erhebungen, etc. ausgebildet sein. Die Abstandselemente 12 sind bevorzugt derart auf der Auflagefläche 7 angeordnet, dass durch sie ein möglichst großflächig verteilter Luftstrom unterhalb eines auf den Abstandselementen 12 aufliegenden mobilen Endgeräts erreicht wird. Um dieses letztgenannte Ziel zu erreichen, kann auch eine entsprechende Ausgestaltung der wenigstens einen Luftaustrittsöffnung 6 beitragen. Wie in Fig. 4 beispielhaft dargestellt ist, kann etwa die wenigstens eine Luftaustrittsöffnung 6 derart längsförmig ausgebildet sein, dass die austretende Luft bereits über einen großen Teil der Breite oder Länge eines mobilen Endgeräts aus dem Gehäuse 5 der Ladevorrichtung 1 austritt.

Wie in den Fig. 1 ― 3 und 5 dargestellt ist, kann die Ladevorrichtung 1 optional eine Schutzeinrichtung 18, etwa in Form eines Lüftungsgitters aufweisen, mit der die aktive Luftzufuhreinrichtung 9 vor mechanischen Beschädigungen geschützt werden kann, insbesondere vor und beim Einbau in einen Einbauschacht 17 und vor und beim Einbau bspw. in ein (Kraft)Fahrzeug 16.

Wie der Fig. 5 entnommen werden kann, kann das Gehäuse 5 der Ladevorrichtung 1 nicht nur wenigstens eine Lufteintrittsöffnung 4 und wenigstens eine Luftaustrittsöffnung 6 aufweisen, sondern auch noch wenigstens eine weitere Öffnung 19.

Wenigstens eine solche Öffnung 19 (und gegebenenfalls eine entsprechende Öffnung in einem Einbauschacht 17) kann insbesondere dann von Vorteil sein, wenn, wie dies in Fig. 5 dargestellt ist, wenigstens die dem Boden des Gehäuses 5 zugewandte Fläche des Kühlkörpers 8 zumindest auf einem Teil davon Kühlrippen 13, Kühlflossen und/oder Kühlstifte aufweist. Über diese Kühlrippen 13, Kühlflossen und/oder Kühlstifte kann bei nicht aktivierter Luftzufuhreinrichtung 9 vom Kühlkörper 8 durch die wenigstens eine weitere Öffnung 19 hindurch leichter Wärme an die Umgebung der Ladevorrichtung 1 abgegeben werden, als dies bei einem bis auf die wenigstens eine Lufteintrittsöffnung 4 geschlossenen Boden des Gehäuses 5 der Fall wäre.

Gemäß einer weiteren Ausführungsform der vorliegenden Erfindung kann, wie in Fig. 3 beispielhaft dargestellt ist, die Ladevorrichtung 1 weiter eine Mobilfunkantennen-Einrichtung 14 aufweisen, die in dem Gehäuse 5 angeordnet ist oder die ein Element der der Seite des Gehäuses 5 ist, deren Au-ßenseite zumindest teilweise als Auflagefläche 7 für das mobile Endgerät dient. Durch eine derartige Mobilfunkantennen-Einrichtung 14 können Signale von der Mobilfunkantennen-Einrichtung eines mobilen Endgeräts, das sich auf der Auflagefläche 7 der Ladevorrichtung 1 befinde, drahtlos aufgenommen und bspw. an die Dachantenne 20 eines Kraftfahrzeugs 16 weitergeleitet werden und vice versa. Hierdurch kann der Mobilfunkempfang bei einem sich auf der Auflagefläche 7 der Ladeinrichtung 1 befindlichen mobilen Endgeräts im Vergleich zu einer Ladevorrichtung 1 ohne eine solche Mobilfunkantennen-Einrichtung 14 verbessert sein.

Gemäß noch einer weiteren Ausführungsform der vorliegenden Erfindung kann der Ladevorrichtung 1 eine (aus dem Stand der Technik bekannte und für den erfindungsgemäßen Zweck geeignete) Mikrofoneinrichtung 15 zur Erfassung der Lautstärke in einem Umfeld der Ladevorrichtung 1 zugeordnet sein, die zweite Steuereinrichtung 11 in Signalverbindung mit der Mikrofoneinrichtung 15 stehen und dazu eingerichtet sein, die aktive Luftzufuhreinrichtung 9 auch in Abhängigkeit von der Lautstärke in dem Umfeld der Ladevorrichtung 1 anzusteuern.

Bei der in Fig. 3 beispielhaft dargestellten Ladevorrichtung 1 ist die Mobilfunkantennen-Einrichtung 14, die Mikrofoneinrichtung 15 sowie der Anwesenheitssensor 21 kumulativ vorhanden. Selbstverständlich können von diesen Einrichtungen bei der Ladevorrichtung 1 gemäß Fig. 3 auch nur eine oder zwei davon vorhanden sein. Auch können von den genannten Einrichtungen eine, zwei oder alle drei auch bei dem in Fig. 1 dargestellten Beispiel vorgesehen sein. Entsprechendes gilt selbstverständlich auch für sämtliche vorteilhaften Weiterbildungen und Ausgestaltungen der Ladevorrichtung 1.

Mit dem Betrieb der aktiven Luftzufuhreinrichtung 9 und dem damit verbundenen Strömen der durch sie in das Gehäuse 5 angesaugten und aus der Luftaustrittsöffnung 6 austretenden Luft wird regelmäßig eine gewisse Geräuschentwicklung verbunden sein. Diese kann in einer Umgebung, in der ansonsten ein sehr niedriges Geräuschniveau gegeben ist (etwa in einem Kraftfahrzeug der Premiumklasse) als störend empfunden werden. Entsprechendes gilt bspw. bei einem Fahrzeug mit nicht laufender Verbrennungskraftmaschine (etwa bei Fahrzeugen mit einer "Start-Stopp"-Funktion und einem Halt von einer Ampel oder in einem Stau).

Vor diesem Hintergrund kann gemäß der vorliegenden Erfindung vorgesehen sein, dass für den Fall, dass durch die Mikrofoneinrichtung 15 nur ein sehr niedriges Geräuschniveau in einem Umfeld der Ladevorrichtung 1 festgestellt wird, durch die zweite Steuereinrichtung 11 die aktive Luftzufuhreinrichtung 9 ausgeschaltet oder mit nicht maximaler Leistung betrieben wird. Auch kann vorgesehen sein, dass die Ansteuerung der aktiven Luftzufuhreinrichtung 9 derart in Abhängigkeit von dem Geräuschniveau in dem Umfeld der Ladevorrichtung 1 erfolgt, dass die Luftzufuhreinrichtung 9 mit umso größere Leistung betrieben werden kann, je höher das Geräuschniveau in einem Umfeld der Ladevorrichtung 1 ist. Bei der Ermittlung des Geräuschniveaus im Umfeld der Ladevorrichtung 1 sowie für die Ansteuerung der Ladevorrichtung 1 kann der durch den gegebenenfalls bereits gegebenen Betrieb der Luftzufuhreinrichtung 9 verursachte Geräuschanteil entsprechend "herausgerechnet" werden.

Des Weiteren kann vorgesehen sein, dass die Luftzufuhreinrichtung 9 mit umso größerer Leistung betrieben werden kann bzw. wird, umso mehr die erste Grenztemperatur überschritten ist.

Von der vorliegenden Erfindung umfasst ist auch ein Fahrzeug 16, insbesondere ein Kraftfahrzeug 16, mit einer Ladevorrichtung 1 gemäß der vorliegenden Erfindung oder einer ihrer vorteilhaften Weiterbildungen und Ausgestaltungen.

Auch wenn die vorliegende Erfindung ganz überwiegend im Zusammenhang mit mobilen Endgeräten beschrieben wurde, deren elektrischer Energiespeicher drahtlos aufladbar ist, so sei hier ausdrücklich darauf hingewiesen, dass die erfindungsgemäße Ladevorrichtung 1 sowie deren vorteilhafte Weiterbildungen und Ausgestaltungen selbstverständlich auch in Verbindung mit mobilen Endgeräten verwendet werden können, die nicht drahtlos ladefähig sind.

Befindet sich etwa ein mobiles Endgerät ohne drahtlose Ladefunktion auf der Auflagefläche 7 des Gehäuses 5 und wird dieses Endgerät bspw. durch ein oder mehrere darauf ablaufende Programme (etwa ein Navigations-Programm) stark oder extrem belastet, hat dies eine starke Erwärmung dieses mobilen Endgeräts zur Folge.

Ein Teil dieser Ab- oder Verlustwärme des auf der Auflagefläche 7 liegenden mobilen Endgeräts wird auf den Kühlkörper 8 übertragen und kann von diesem abgeführt werden. Wird durch die Temperatursensoreinrichtung 10 festgestellt, dass eine erste Grenztemperatur des Kühlkörpers 8 erreicht oder überschritten ist, kann ― ohne dass dies von der vorliegenden Erfindung umfasst wäre ― auch die aktive Luftzufuhreinrichtung 9 aktiviert werden, um hierdurch sowohl den Kühlkörper 8 als auch das mobile Endgerät ohne drahtlose Ladefunktion aktiv zu kühlen.

## Patentansprüche

1. Ladevorrichtung (1) zum drahtlosen Aufladen eines wiederaufladbaren elektrischen Energiespeichers eines mobilen Endgeräts, aufweisend
- eine Primärspuleneinrichtung (2) und eine damit operativ verbundene erste Steuereinrichtung (3) wenigstens zum Steuern der Stärke und Dauer des durch die Primärspuleneinrichtung (2) erzeugbaren Wechselmagnetfelds, und
- ein Gehäuse (5), in dem die erste Steuereinrichtung (3) angeordnet ist,
wobei das Gehäuse (5) wenigstens eine Lufteintrittsöffnung (4) und wenigstens eine Luftaustrittsöffnung (6) aufweist, wobei die wenigstens eine Luftaustrittsöffnung (6) des Gehäuses (5) in einer Seite des Gehäuses (5) angeordnet ist, deren Außenseite zumindest teilweise die Auflagefläche (7) für das mobile Endgerät ist und derart ausgestaltet ist, dass aus dem Gehäuse (5) der Ladevorrichtung (1) ausströmende Luft in Richtung eines auf der Auflagefläche (7) liegenden mobilen Endgeräts geleitet wird,
**dadurch gekennzeichnet, dass**
die Ladevorrichtung (1) weiter aufweist
- einen Kühlkörper (8), der in dem Gehäuse (5) angeordnet ist,
- eine aktive Luftzufuhreinrichtung (9), die dem Kühlkörper (8) zugeordnet ist, die dazu eingerichtet ist, dem Kühlkörper (8) aktiv, zumindest auch durch die wenigstens eine Lufteintrittsöffnung (4) einströmbare Umgebungsluft zuzuführen,
- eine Temperatursensoreinrichtung (10), die dem Kühlkörper (8) zugeordnet ist, zur Erfassung der Temperatur des Kühlkörpers (8), und
- eine zweite Steuereinrichtung (11), die in Signalverbindung mit der Temperatursensoreinrichtung (10) steht sowie operativ mit der aktiven Luftzufuhreinrichtung (9) gekoppelt ist, und die dazu eingerichtet ist, die aktive Luftzufuhreinrichtung (9) aktivieren zu können, falls eine vorgebbare erste Grenztemperatur des Kühlkörpers (8) erreicht oder überschritten ist, wobei die zweite Steuereinrichtung (11) auch mit der ersten Steuereinrichtung (3) in Signalverbindung steht und dazu eingerichtet ist, die aktive Luftzufuhreinrichtung (9) nur zu aktivieren, sofern bei oder nach Erreichen oder Überschreiten der ersten Grenztemperatur des Kühlkörpers (8) auch ein drahtloses Aufladen eines elektrischen Energiespeichers eines mobilen Endgeräts durchgeführt wird.

2. Ladevorrichtung (1) gemäß Anspruch 1,
**dadurch gekennzeichnet, dass**
sie weiter einen Anwesenheitssensor (21) aufweist, der dazu eingerichtet ist festzustellen, ob sich auf der Auflagefläche (7) des Gehäuses (5), ein Gegenstand befindet, und der in Signalverbindung mit der zweiten Steuereinrichtung (11) steht.

3. Ladevorrichtung (1) gemäß Anspruch 1 oder 2,
**dadurch gekennzeichnet, dass**
die zweite Steuereinrichtung (11) dazu eingerichtet ist,
- die aktive Luftzufuhreinrichtung (9) erst wieder zu deaktivieren, sobald eine vorgebbare zweite Grenztemperatur des Kühlkörpers (8), die niedriger als die erste Grenztemperatur ist, erreicht oder unterschritten ist, und/oder
- die aktive Luftzufuhreinrichtung (9) nicht zu aktivieren sofern oder zu deaktivieren sobald durch den Anwesenheitssensor (21) festgestellt wird, dass sich auf der Außenseite des Gehäuses (5), die zumindest teilweise als Auflagefläche (7) für das mobile Endgerät dient, kein Gegenstand befindet.

4. Ladevorrichtung (1) gemäß einem der vorhergehenden Ansprüche,
**dadurch gekennzeichnet, dass**
die aktive Luftzufuhreinrichtung (9) in der wenigstens einen Lufteintrittsöffnung (4) des Gehäuses (5) angeordnet ist.

5. Ladevorrichtung (1) gemäß einem der vorhergehenden Ansprüche,
**dadurch gekennzeichnet, dass**
die wenigstens eine Luftaustrittsöffnung (6)
- in einem vorgebbaren Randbereich R der Seite des Gehäuses (5) angeordnet ist, deren Außenseite zumindest teilweise als Auflagefläche (7) für das mobile Endgerät dient, derart, dass die wenigstens eine Luftaustrittsöffnung (6) in einem Einbauzustand des Gehäuses (5) um einen vorgebbaren Abstandswert A horizontal gegenüber dem der wenigstens einen Luftaustrittsöffnung (6) nächstkommenden Teil der ersten Steuereinrichtung (3) versetzt ist, und/oder
- derart ausgebildet ist, dass die Strömungsrichtung der durch sie austretenden Luft einen spitzen Winkel gegenüber der Auflagefläche (7) aufweist.

6. Ladevorrichtung (1) gemäß einem der vorhergehenden Ansprüche,
**dadurch gekennzeichnet, dass**
die Auflagefläche (7) Abstandselemente (12) aufweist, durch die zwischen der Auflagefläche (7) und einer Auflageseite des mobilen Endgeräts ein vorgebbarer Abstand gewährleistet ist.

7. Ladevorrichtung (1) gemäß einem der vorhergehenden Ansprüche,
**dadurch gekennzeichnet, dass**
der Kühlkörper (8) Kühlrippen (13), Kühlflossen und/oder Kühlstifte aufweist, die in einem Einbauzustand des Kühlkörpers (8) auf der der ersten Steuereinrichtung (3) abgewandten Seite des Kühlkörpers (8) angeordnet sind.

8. Ladevorrichtung (1) gemäß einem der vorhergehenden Ansprüche,
**dadurch gekennzeichnet, dass**
- die Primärspuleneinrichtung (2) in einem Einbauzustand benachbart zur ersten Steuereinrichtung (3) angeordnet ist und/oder ein Element der Seite des Gehäuses (5) ist, deren Außenseite zumindest teilweise als Auflagefläche (7) für das mobile Endgerät dient,
- sie weiter eine Mobilfunkantennen-Einrichtung (14) aufweist, die in dem Gehäuse (5) angeordnet ist oder die ein Element der Seite des Gehäuses (5) ist, deren Außenseite zumindest teilweise als Auflagefläche (7) für das mobile Endgerät dient, und/oder
- dieser eine Mikrofoneinrichtung (15) zur Erfassung der Lautstärke in einem Umfeld der Ladevorrichtung (1) zugeordnet ist, die zweite Steuereinrichtung (11) in Signalverbindung mit der Mikrofoneinrichtung (15) steht und dazu eingerichtet ist, die aktive Luftzufuhreinrichtung (9) auch in Abhängigkeit von der Lautstärke in dem Umfeld der Ladevorrichtung (1) anzusteuern.

9. Fahrzeug (16), insbesondere Kraftfahrzeug (16), mit einer Ladevorrichtung (1) gemäß einem der Ansprüche 1 bis 8.

## Claims

1. Charging apparatus (1) for wirelessly charging a rechargeable electrical energy store of a mobile terminal, having
- a primary coil apparatus (2) and a first control apparatus (3) operatively connected thereto for at least controlling the intensity and duration of the alternating magnetic field that can be produced by the primary coil apparatus (2), and
- a housing (5), in which the first control apparatus (3) is arranged,
wherein the housing (5) has at least one air entry opening (4) and at least one air exit opening (6), wherein the at least one air exit opening (6) of the housing (5) is arranged in one side of the housing (5), the exterior of which is at least partially the contact surface (7) for the mobile terminal and is designed such that air flowing out of the housing (5) of the charging apparatus (1) is directed towards a mobile terminal situated on the contact surface (7),
**characterised in that**,
the charging apparatus (1) also has
- a heat sink (8), which is arranged in the housing (5),
- an active air supply apparatus (9), which is associated with the heat sink (8), which is set up to actively supply the heat sink (8) with ambient air that can flow in, at least also through the at least one air entry opening (4),
- a temperature sensor apparatus (10), which is associated with the heat sink (8), for sensing the temperature of the heat sink (8), and
- a second control apparatus (11), which has a signal connection to the temperature sensor apparatus (10) and is operatively connected to the active air supply apparatus (9), and that is set up to be able to activate the active air supply apparatus (9) should a predeterminable first limit temperature of the heat sink (8) be reached or exceeded, wherein the second control apparatus (11) also has a signal connection to the first control apparatus (3) and is set up to activate the active air supply apparatus (9) only if wireless charging of an electrical energy store of a mobile terminal is also performed when or after the first limit temperature of the heat sink (8) is reached or exceeded.

2. Charging apparatus (1) according to claim 1,
**characterised in that**,
it also has a presence sensor (21), which is set up to determine whether there is an object on the contact surface (7) of the housing (5), and that has a signal connection to the second control apparatus (11).

3. Charging apparatus (1) according to claim 1 or 2,
**characterised in that**,
the second control apparatus (11) is set up to
- only deactivate the active air supply apparatus (9) again as soon as a predeterminable second limit temperature of the heat sink (8), which is lower than the first limit temperature, is reached or fallen below, and/or
- not to activate the active air supply apparatus (9) if, or to deactivate it as soon as, the presence sensor (21) determines that there are no objects on the exterior of the housing (5), which acts at least partially as the contact surface (7) for the mobile terminal.

4. Charging apparatus (1) according to any of the preceding claims,
**characterised in that**,
the active air supply apparatus (9) is arranged in the at least one air entry opening (4) of the housing (5).

5. Charging apparatus (1) according to any of the preceding claims,
**characterised in that**,
the at least one air exit opening (6)
- is arranged in a predeterminable edge region R of the side of the housing (5), the exterior of which acts at least partially as a contact surface (7) for the mobile terminal, such that the at least one air exit opening (6) is offset horizontally by a predeterminable distance value A relative to the closest part of the first control apparatus (3) of the at least one air exit opening (6) in an installed state of the housing (5), and/or
- is designed such that the direction of flow of the air exiting through it has an acute angle relative to the contact surface (7).

6. Charging apparatus (1) according to any of the preceding claims,
**characterised in that**,
the contact surface (7) has spacers (12), by means of which a predeterminable distance is ensured between the contact surface (7) and a contact side of the mobile terminal.

7. Charging apparatus (1) according to any of the preceding claims,
**characterised in that**,
the heat sink (8) has cooling ribs (13), cooling fins and/or cooling pins, which are arranged on the side facing away from the heat sink (8) of the first control apparatus (3) in an installed state of the heat sink (8).

8. Charging apparatus (1) according to any of the preceding claims,
**characterised in that**,
- the primary coil apparatus (2), in an installed state, is arranged adjacent to the first control apparatus (3) and/or is an element of the side of the housing (5), the exterior of which acts at least partially as the contact surface (7) for the mobile terminal,
- it also has a mobile phone antenna apparatus (14), which is arranged in the housing (5) or which is an element of the side of the housing (5), the exterior of which acts at least partially as the contact surface (7) for the mobile terminal, and/or
- the latter is associated with a microphone apparatus (15) for registering the volume in an environment of the charging apparatus (1), the second control apparatus (11) has a signal connection to the microphone apparatus (15) and is set up to control the active air supply apparatus (9) including as a function of the volume in the environment of the charging apparatus (1).

9. Vehicle (16), in particular motor vehicle (16), with a charging apparatus (1) according to any of claims 1 to 8.

## Revendications

1. Dispositif de charge (1) pour charger sans fil un accumulateur d'énergie électrique rechargeable d'un terminal mobile, comprenant
- un dispositif de bobine primaire (2) et un premier appareil de commande (3) relié fonctionnellement à celui-ci au moins pour commander l'intensité et la durée du champ magnétique alternatif qui peut être généré par le dispositif de bobine primaire (2), et
- un boîtier (5) dans lequel est disposé le premier appareil de commande (3), le boîtier (5) présentant au moins une ouverture d'entrée d'air (4) et au moins une ouverture de sortie d'air (6), dans lequel ladite au moins une ouverture de sortie d'air (6) du boîtier (5) est disposée dans une face du boîtier (5), dont la face extérieure est au moins partiellement la surface d'appui (7) pour le terminal mobile et est conçue de telle sorte que l'air sortant du boîtier (5) du dispositif de charge (1) est dirigé en direction d'un terminal mobile reposant sur la surface d'appui (7),
**caractérisé en ce que**,
le dispositif de charge (1) comprend en outre
- un dissipateur thermique (8), qui est disposé dans le boîtier (5),
- un dispositif de fourniture d'air actif (9) qui est associé au dissipateur thermique (8), qui est conçu pour fournir au dissipateur thermique (8), de manière active, de l'air ambiant pouvant être fourni au moins également à travers ladite au moins une ouverture d'entrée d'air (4),
- un dispositif de détection de température (10) qui est associé au dissipateur thermique (8), pour détecter la température du dissipateur thermique (8), et
- un second appareil de commande (11) qui est en liaison de signal avec le dispositif de détection de température (10) et qui est couplé de manière fonctionnelle au dispositif de fourniture d'air actif (9) et qui est conçu pour pouvoir activer le dispositif de fourniture d'air actif (9) si une première température limite, qui peut être prédéterminée, du dissipateur thermique (8) est atteinte ou dépassée, dans lequel le second appareil de commande (11) est également en liaison de signal avec le premier appareil de commande (3) et est conçu pour activer le dispositif de fourniture d'air actif (9) uniquement lorsqu'une charge sans fil d'un accumulateur d'énergie électrique d'un terminal mobile est effectivement mise en œuvre lorsque ou après que la première température limite du dissipateur thermique (8) est atteinte ou dépassée.

2. Dispositif de charge (1) selon la revendication 1,
**caractérisé en ce que**
il comprend en outre un détecteur de présence (21) qui est conçu pour déterminer si un objet se trouve sur la surface d'appui (7) du boîtier (5) et qui est en liaison de signal avec le second appareil de commande (11).

3. Dispositif de charge (1) selon la revendication 1 ou 2,
**caractérisé en ce que**
le second appareil de commande (11) est conçu pour
- désactiver le dispositif de fourniture d'air actif (9) seulement une fois qu'une seconde température limite du dissipateur thermique (8), qui peut être prédéterminée et qui est inférieure à la première température limite, a été atteinte ou n'est pas atteinte, et/ou
- ne pas activer ou désactiver le dispositif de fourniture d'air actif (9) s'il est déterminé par le détecteur de présence (21) qu'aucun objet ne se trouve sur la face extérieure du boîtier (5) qui sert au moins partiellement de surface d'appui (7) pour le terminal mobile.

4. Dispositif de charge (1) selon l'une quelconque des revendications précédentes,
**caractérisé en ce que**
le dispositif de fourniture d'air actif (9) est disposé dans ladite au moins une ouverture d'entrée d'air (4) du boîtier (5).

5. Dispositif de charge (1) selon l'une quelconque des revendications précédentes,
**caractérisé en ce que**
ladite au moins une ouverture de sortie d'air (6)
- est disposée dans une zone de bordure R pouvant être prédéterminée de la face du boîtier (5), dont la face extérieure sert au moins partiellement de surface d'appui (7) pour le terminal mobile, de telle sorte que, dans un état monté du boîtier (5), **en ce que** ladite au moins une ouverture de sortie d'air (6) est décalée horizontalement d'une valeur de distance A pouvant être prédéterminée par rapport à la partie du premier appareil de commande (3) qui s'approche le plus de ladite au moins une ouverture de sortie d'air (6), et/ou
- est conçue de telle sorte que la direction d'écoulement de l'air qui sort de celle-ci présente un angle aigu par rapport à la surface d'appui (7).

6. Dispositif de charge (1) selon l'une quelconque des revendications précédentes,
**caractérisé en ce que**
la surface d'appui (7) comprend des éléments d'espacement (12), qui assurent une distance pouvant être prédéterminée entre la surface d'appui (7) et une face d'appui du terminal mobile.

7. Dispositif de charge (1) selon l'une quelconque des revendications précédentes,
**caractérisé en ce que**
le dissipateur thermique (8) comprend des nervures de refroidissement (13), des ailettes de refroidissement et/ou des broches de refroidissement qui, dans un état installé du dissipateur thermique (8), sont disposées sur la face du dissipateur thermique (8) opposée au premier appareil de commande (3).

8. Dispositif de charge (1) selon l'une quelconque des revendications précédentes, **caractérisé en ce que**
- le dispositif de bobine primaire (2) est agencé, dans un état installé, adjacent au premier appareil de commande (3) et/ou est un élément de la face du boîtier (5) dont la face extérieure sert au moins partiellement de surface d'appui (7) pour le terminal mobile,
- il comprend en outre un dispositif d'antenne radio mobile (14), qui est disposé dans le boîtier (5) ou qui est un élément de la face du boîtier (5) dont la face extérieure sert au moins partiellement de surface d'appui (7) pour le terminal mobile, et/ou
- un dispositif de microphone (15) pour détecter le volume sonore dans un environnement du dispositif de charge (1) est associé à ce dernier, le second appareil de commande (11) est en liaison de signal avec le dispositif de microphone (15) et est conçu pour commander le dispositif de fourniture d'air actif (9) également en fonction du volume sonore dans l'environnement du dispositif de charge (1).

9. Véhicule (16), notamment véhicule automobile (16), comprenant un dispositif de charge (1) selon l'une quelconque des revendications 1 à 8.
